Europäisches Patentamt

European Patent Office

Office européen des brevets

(11) Numéro de publication : **0 401 073 B1**

(12) **FASCICULE DE BREVET EUROPEEN**

(45) Date de publication du fascicule du brevet :
17.03.93 Bulletin 93/11

(51) Int. Cl.⁵ : **G01H 3/12**

(21) Numéro de dépôt : **90401280.4**

(22) Date de dépôt : **15.05.90**

(54) **Procédé et dispositif de correction des signaux fournis par les hydrophones d'une antenne, et antenne de sonar utilisant un tel dispositif.**

(30) Priorité : **02.06.89 FR 8907303**

(43) Date de publication de la demande :
**05.12.90 Bulletin 90/49**

(45) Mention de la délivrance du brevet :
**17.03.93 Bulletin 93/11**

(84) Etats contractants désignés :
**DE GB**

(56) Documents cités :
**EP-A- 0 103 257**
**DE-A- 3 520 398**

(73) Titulaire : **THOMSON-CSF**
**51, Esplanade du Général de Gaulle**
**F-92800 Puteaux (FR)**

(72) Inventeur : **Fromont, Bernard**
**THOMSON-CSF, SCPI, Cédex 67**
**F-92045 Paris la Défense (FR)**

(74) Mandataire : **Courtellemont, Alain et al**
**THOMSON-CSF, SCP, B.P. 329, 50, rue**
**Jean-Pierre Timbaud**
**F-92402 Courbevoie Cédex (FR)**

Jouve, 18, rue Saint-Denis, 75001 PARIS

**Description**

La présente invention se rapporte à la correction des signaux d'écoute fournis par une antenne de sonar faite d'hydrophones montés sur une paroi telle que, par exemple, une coque. Dans la description qui suit le terme de coque est utilisé à titre d'exemple, étant entendu que ce qui est dit à son sujet est transposable à toute paroi soumise à des vibrations dans l'eau.

Les hydrophones sont des capteurs acoustiques destinés à fonctionner dans l'eau et chaque hydrophone de l'antenne fournit un signal qui est fonction des ondes incidentes provenant du milieu extérieur à la coque.

Il est rappelé que, pour trouver la direction d'une onde incidente, il est connu de former des voies, chaque voie correspondant à une direction déterminée.

Avec des hydrophones régulièrement espacés d'une distance d et disposés selon une ligne qui fait un angle a avec une direction donnée, une voie dans la direction donnée est obtenue en déphasant les signaux d'hydrophones d'une valeur w.d.sin a / c, où w est la pulsation de l'onde incidente et c la vitesse du son dans l'eau. Pour que la voie soit correctement formée il faut que l'onde incidente soit plane à la fréquence w/2¶.

L'antenne doit être montée sur un support qui est généralement la coque d'un bâtiment naval (navire de surface ou sous-marin). Or la coque est élastique et ne constitue donc pas un baffle rigide : elle vibre sous l'effet de l'onde incidente et les vibrations de la coque perturbent la planéité de l'onde. Il en résulte que les relations de phase entre les signaux reçus par les hydrophones sont perturbées et que la formation des voies n'est plus assurée correctement.

En effet, comme il est bien connu, chaque hydrophone reçoit l'onde incidente et l'onde réfléchie sur la coque. L'onde réfléchie se décompose en une onde qu'aurait donné la coque si elle avait été parfaitement immobile, c'est l'effet de baffle rigide, et une onde due à la vibration induite par l'onde incidente.

L'effet de baffle rigide n'est pas gênant pour la formation des voies, car l'amplitude et la phase de l'onde réfléchie correspondante dépendent peu de l'emplacement de l'hydrophone sur la coque quelles que soient la fréquence et l'incidence de l'onde excitatrice. En revanche, l'effet de la vibration est perturbateur.

Pour corriger cet effet perturbateur il est connu de placer une barrière acoustique entre les hydrophones de l'antenne et la coque. Cette barrière reste immobile sous l'effet de l'onde incidente qui s'y réfléchit.

Mais cette barrière est inefficace aux fréquences inférieures à 1kHz étant donné qu'elle doit résister à la pression hydrostatique et donc être suffisamment rigide, et que ses dimensions restent petites devant la longueur d'onde de l'onde captée.

Il est également connu, par le document DE-A 35 20 398, de corriger le signal reçu par un hydrophone monté sur un navire en utilisant des capteurs qui mesurent les signaux parasites produits par des éléments du navire tels que ses machines et ses réservoirs ; mais le signal de correction élaboré à l'aide de ces capteurs ne corrige pas, dans le signal fourni par l'hydrophone, la partie parasite due à la vibration induite par l'onde incidente utile lors de sa réflexion sur la coque du navire.

La présente invention a pour but de corriger les signaux de sortie des hydrophones d'une antenne afin d'éviter ou, pour le moins, de réduire les perturbations dues aux vibrations de la coque, quelle que soit leur origine.

Ceci est obtenu en mesurant la vibration de la coque et en élaborant, à partir des mesures obtenues, un signal de correction qui, à l'emplacement de chaque hydrophone, est équivalent à la pression rayonnée par la vibration de la coque. Ce signal de correction est alors retranché au signal issu de chaque hydrophone.

Selon l'invention un procédé de correction du signal électrique issu d'un hydrophone d'une antenne acoustique, l'hydrophone étant monté au voisinage d'une paroi et étant destiné à capter un signal acoustique, est caractérisé en ce que, pour tenir compte au moins des vibrations de la paroi engendrées par le signal acoustique à capter, il consiste à soustraire du signal électrique issu de l'hydrophone la contribution liée aux vibrations de la paroi, grâce à une mesure et un traitement par mode de ces vibrations au moyen de capteurs disposés sur la paroi, au voisinage de l'antenne, le signal de sortie de chaque capteur étant traité autant de fois qu'il y a de modes de vibration dont il est décidé de tenir compte en raison de leur influence perturbatrice sur le signal issu de l'hydrophone.

La présente invention sera mieux comprise et d'autres caractéristiques apparaîtront à l'aide de la description ci-après et des figures s'y rapportant qui représentent :

- la figure 1, un schéma général d'un dispositif de correction selon l'invention,
- la figure 2, un schéma partiel d'un exemple simple de réalisation d'un dispositif de correction selon l'invention.

Sur les différentes figures les éléments correspondants sont désignés par les mêmes repères.

La vibration d'une coque, comme pour toute structure, se décompose en modes de vibration ; un mode de vibration correspond à une certaine répartition de la vitesse vibratoire le long de la coque. Si x est une abscisse prise, par exemple, suivant l'axe d'une antenne faite d'hydrophones alignés, la vitesse vibratoire $v_m(x)$ pour le mode m est le produit : $v_m(x) = V_m.Y_m(x)$ ou $V_m$ est l'amplitude à l'origine pour le mode m et $Y_m(x)$ la fonction d'onde. Cette fonction d'onde est connue de la théorie des vibrations et de la mesure de $v_m(x)$ ; la vitesse, $V_m$, à l'origine, pour le mode m, se déduit donc de la mesure de la vitesse vibratoire $v_m(x)$, en un ou quelques points de la coque.

Par ailleurs, il est connu qu'une impédance acoustique de transfert, pour un mode de vibration donné, est le rapport $Z_m(x_h)=P_m(x_h)/V_m$ où $P_m(x_h)$ est la pression acoustique pour le mode m reçu en un point $x_h$ où se trouve un hydrophone de l'antenne.

La pression totale due à la vibration et reçue par l'hydrophone est :

$$P_h = \sum_{m=1}^{\infty} Z_m(x_h) \cdot V_m$$

Les impédances $Z_m(x_h)$ sont déterminées par calculs (modèlisation) ou par étalonnage. Il apparaît donc que la mesure en amplitude et phase de $v_m(x)$, pour un certain nombre de modes, permet d'obtenir un signal représentatif de $P_h$ qui, soustrait du signal de l'hydrophone situé au point $x_h$, élimine les effets de la vibration de coque.

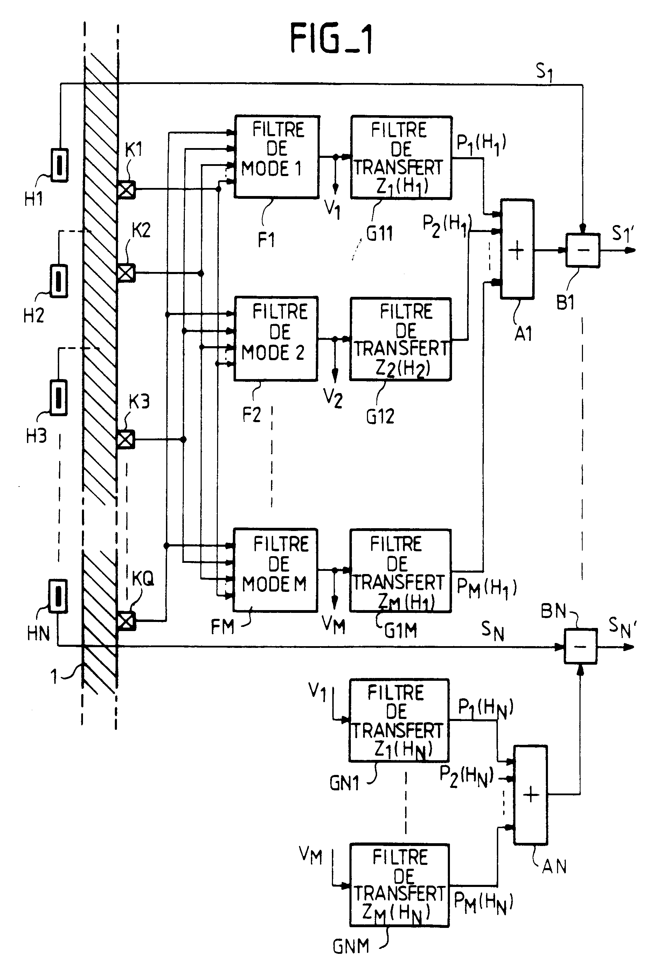

Ceci est mis en oeuvre dans le dispositif selon la figure 1.

La figure 1 montre, vue en coupe, une partie de la coque, 1, d'un navire muni d'un dispositif de correction selon l'invention ; dans la réalisation, qui a servi à l'expérimentation du dispositif, le navire était un bâtiment de surface mais le dispositif selon l'invention est utilisable également sur un sous-marin et sur la paroi de tout corps élastique immergé muni d'un système d'écoute par hydrophones.

De manière classique, des hydrophones, H1 à HN, sont fixés à quelques centimètres de la coque 1 ; ces hydrophones sont enrobés dans un moulage de protection visco-élastique qui ne réduit que très peu le niveau des vibrations qui leur sont transmises par le milieu aquatique.

Les hydrophones H1 à HN fournissent respectivement des signaux $S_1$ à $S_N$, qui sont appliqués respectivement à des soustracteurs B1 à BN. Ces soustracteurs soustraient au signal qui leur parvient d'un hydrophone, un signal de correction destiné à débarrasser, autant que faire se peut, le signal de l'hydrophone de ses composantes dues aux vibrations de la coque.

Des capteurs de vibrations, K1 à KQ, constitués dans l'exemple décrit par des accéléromètres, sont répartis sur la paroi interne de la coque, au voisinage de l'antenne constituée par les hydrophones.

Les signaux fournis par les capteurs de vibrations sont représentatifs de la vitesse vibratoire v(x) échantillonnée aux points de mesure des capteurs ; l'ensemble de ces signaux est appliqué à des filtres de mode, F1 à FM, relatifs respectivement à M modes vibratoires de la coque dont il a été décidé de tenir compte en raison de leur influence perturbatrice sur les signaux des hydrophones. Il est à noter que le nombre Q des capteurs de vibrations, doit être supérieur ou égal au nombre M de modes vibratoires dont il est tenu compte.

Chacun des M filtres de mode réalise, pour le mode m auquel il correspond, un traitement qui donne l'amplitude et la phase à l'origine :

$$V_m = v_m(x)/Y_m(x)$$

compte tenu de ce que

$$v(x) = \sum_{m=1}^{\infty} v_m(x).$$

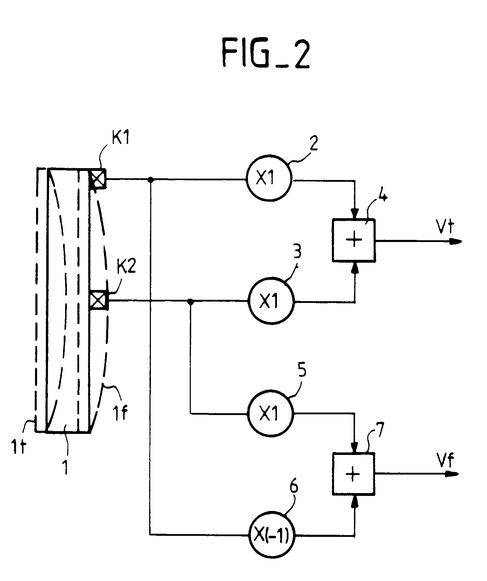

Pour réaliser ce filtrage, les signaux v(x) délivrés par les capteurs sont multipliés par des coefficients connus, fonctions de la fréquence et déterminés pour le mode considéré, et les signaux ainsi obtenus sont additionnés entre eux ; un exemple de mise en oeuvre d'un tel filtrage de mode est décrit plus loin à l'aide de la figure 2.

Chacun des M signaux $V_1$ à $V_M$ est ensuite multiplié, par l'impédance de transfert $Z_m(H_i)$ relative au mode m considéré et à l'hydrophone i considéré ; comme $Z_m(H_i)$ est fonction de la fréquence, les circuits qui effectuent cette opération réalisent donc un filtrage et sont appelés filtres de transfert sur la figure 1. Ainsi, à l'hydrophone H1 correspondent, respectivement pour les modes 1 à M, les filtres de transfert G11 à G1M dont les impédances ont été notées respectivement $Z_1(H_1)$ à $Z_M(H_1)$. Et, à l'hydrophone HN, correspondent les filtres de transfert GN1 à GNM relatifs respectivement aux modes 1 à M et qui reçoivent respectivement les mêmes signaux d'entrée $V_1$ à $V_M$ ; les fonctions de transfert de ces filtres sont notées $Z_1(H_N)$ à $Z_M(H_N)$.

Les signaux de sortie des filtres de transfert sont représentatifs des pressions $P_m(H_i)$ relatives, pour un hydrophone i donné, à un mode m considéré. Pour un hydrophone i donné, un additionneur Ai fait la somme des signaux de pression relatifs à cet hydrophone dans les modes 1 à M considérés. Ainsi l'additionneur A1 fait la somme des signaux de pression $P_1(H_1)$ à $P_M(H_1)$. L'additionneur Ai fournit un signal de pression représentatif de la pression totale engendrée par les vibrations de coque sur l'hydrophone $H_i$ ; ce signal constitue le signal de correction qui est soustrait au signal de l'hydrophone Hi ; ainsi la figure 1 montre qu'au signal $S_1$ de l'hydrophone H1 est soustrait, dans le soustracteur B1, le signal de pression totale fourni par l'additionneur A1, ce qui permet au soustracteur B1 de fournir le signal corrigé $S_1'$.

La figure 2 montre une plaque 1, vue par la tranche, qui est soumise à deux modes de vibration principaux dont l'un est un mode de translation entraînant des déplacements de la plaque, qui la font passer par une position 1t indiquée par un tracé en traits interrompus courts, et dont l'autre est un mode de flexion du premier ordre, qui la fait passer par une position 1f indiquée par un tracé en traits interrompus longs.

Deux capteurs de vibrations, K1, K2, sont respectivement disposés à l'une des extrémités et au milieu de la plaque 1.

Le filtre de mode de translation, pour donner un signal Vt représentatif de la vitesse de translation de la plaque 1, est obtenu en multipliant par 1, dans deux circuits de multiplication, 2, 3, les signaux fournis par les capteurs K1 et K2 ; ces circuits de multiplication sont suivis d'un additionneur 4 dont le signal de sortie est le signal Vt.

Le filtre de mode de flexion du premier ordre, pour donner un signal Vf représentatif de la vitesse de flexion de la plaque 1, est obtenu en multipliant par 1, dans un circuit de multiplication 5, le signal fourni par le capteur K2, en multipliant par -1, dans un circuit de multiplication 6 le signal fourni par le capteur K1 et en additionnant, dans un additionneur 7 les signaux délivrés par les circuits de multiplication 5 et 6 ; ces coefficients de multiplication égaux respectivement à 1 et -1 proviennent de ce que, pour le mode de flexion considéré, et aux endroits où sont disposés les capteurs K1 et K2, les signaux représentatifs de la vitesse de flexion sont en opposition de phase.

Suivant une réalisation préférée, la mise en oeuvre du procédé de correction des signaux fournis par les hydrophones est effectuée de façon numérique. Dans ce but les signaux des capteurs de vibrations sont numérisés. Les opérations de filtrage de mode et de transfert sont réalisées dans un calculateur. Les coefficients multiplicateurs des signaux v(x) et les valeurs des impédances de transfert sont mis en mémoire. La détermination de ces valeurs est obtenue par étalonnage au cours d'expériences préalables. La réponse "théorique" des hydrophones à un signal donné, en l'absence de vibrations, est connue et est mise en mémoire. Les valeurs des coefficients de filtrage de mode et des impédances des filtres de transfert sont obtenues par minimisation de l'écart entre la réponse théorique de chaque hydrophone et sa réponse réelle. La minimisation de cet écart est obtenue par un logiciel, basé sur la méthode connue de Newton, en procédant par itérations successives.

Il est à noter que l'invention permet de corriger aussi bien les perturbations dues aux vibrations de coque produites par des sources externes à la coque que celles produites par des sources internes.

## Revendications

1. Procédé de correction du signal électrique issu d'un hydrophone d'une antenne acoustique, l'hydrophone étant monté au voisinage d'une paroi et étant destiné à capter un signal acoustique, caractérisé en ce que, pour tenir compte au moins des vibrations de la paroi engendrées par le signal acoustique à capter, il consiste à soustraire du signal électrique issu de l'hydrophone la contribution liée aux vibrations de la paroi, grâce à une mesure et un traitement par mode de ces vibrations au moyen de capteurs disposés sur la paroi, au voisinage de l'antenne, le signal de sortie de chaque capteur étant traité autant de fois qu'il y a de modes de vibration dont il est décidé de tenir compte en raison de leur influence perturbatrice sur le signal issu de l'hydrophone.

2. Dispositif de correction des signaux fournis par les hydrophones (H1, HN) d'une antenne montée sur une paroi (1), caractérisé en ce qu'il comporte des capteurs de vibrations (K1-KQ) montés sur la paroi au voisinage de l'antenne et, pour chaque hydrophone (H1), des circuits de traitement (F1-FM, G11-G1M) suivis d'un additionneur (A1) pour fournir un signal de correction fonction des signaux délivrés par les capteurs et un soustracteur (B1) pour soustraire, du signal ($S_1$) de l'hydrophone, le signal de correction, et en ce que chaque circuit de traitement comporte en série un filtre de mode (F1-FM), qui réalise une addition pondérée des signaux des capteurs (K1-KQ) et un filtre de transfert (G11-G1M).

3. Dispositif selon la revendication 2, caractérisé en ce que les filtres de mode (F1-FM) sont communs aux circuits de correction des hydrophones (H1 - HN) de l'antenne.

4. Antenne de sonar, caractérisée en ce qu'elle comporte un dispositif de correction selon l'une quelconque des revendications 2 et 3.

## Patentansprüche

1. Verfahren zur Korrektur des von einem Hydrophon einer akustischen Antenne stammenden elektrischen Signals, wobei das Hydrophon in der Nähe einer Wand montiert ist und ein akustisches Signal aufnehmen soll, dadurch gekennzeichnet, daß zur Berücksichtigung mindestens der Schwingungen der Wand, die vom aufzunehmenden akustischen Signal erzeugt werden, das Verfahren darin besteht, vom elektrischen Signal des Hydrophons den Anteil abzuziehen, der den Schwingungen der Wand zuzuordnen ist, aufgrund einer Messung und modusspezifischen Verarbeitung dieser Schwingungen mit Hilfe von auf der Wand in der Nähe der Antenne angebrachten Sonden, wobei das Ausgangssignal jeder Sonde so oft verarbeitet wird, wie es der Anzahl der Schwingungsmodi entspricht, die aufgrund ihrer Störeinflüsse auf das Hydrophonsignal berücksichtigt werden sollten.

2. Korrekturvorrichtung für von den Hydrophonen (H1, HN) einer auf einer Wand (1) montierten Antenne gelieferte Signale, dadurch gekennzeichnet, daß sie Schwingungsmeßsonden (K1 bis KQ), die auf der Wand in der Nähe der Antenne montiert sind, und für jedes Hydrophon (H1) Verarbeitungskreise (F1 bis FM, G11-G1M), gefolgt von einem Addierer (A1) um ein Korrektursignal abhängig von den Sondenausgangssignalen zu liefern, und weiter gefolgt von einem Subtrahierglied (B1) aufweist, das vom Hydrophonsignal (S₁) das Korrektursignal abzieht, und daß jeder Verarbeitungskreis in Reihe ein Modusfilter (F1 bis FM), das eine gewichtete Addition der Sondensignale (K1 bis KQ) durchführt, und ein Transferfilter (G11 bis G1M) aufweist.

3. Vorrichtung nach Anspruch 2, dadurch gekennzeichnet, daß die Modusfilter (F1 bis FM) allen Korrekturkreisen der Hydrophone (H1 bis HN) der Antenne gemein sind.

4. Sonarantenne, dadurch gekennzeichnet, daß sie eine Korrekturvorrichtung nach einem der Ansprüche 2 und 3 enthält.

**Claims**

1. Method of correcting the electrical signal output by a hydrophone of an acoustic antenna, the hydrophone being mounted in the vicinity of a wall and being intended to pick up an acoustic signal, characterised in that, in order to take account at least of the vibrations of the wall engendered by the acoustic signal to be picked up, it consists in subtracting from the electrical signal output by the hydrophone the contribution related to the vibrations of the wall, by virtue of a measurement and per-mode processing of these vibrations by means of sensors arranged on the wall, in the vicinity of the antenna, the output signal from each sensor being processed as many times as there are vibration modes which it has been decided to take account of by reason of their disturbing influence on the signal output by the hydrophone.

2. Device for correcting signals provided by the hydrophones (H1, HN) of an antenna mounted on a wall (1), characterised in that it includes vibration sensors (K1-KQ) mounted on the wall in the vicinity of the antenna and, for each hydrophone (H1), processing circuits (F1-FM, G11-G1M) followed by an adder (A1) for providing a correction signal dependent on the signals delivered by the sensors and a subtractor (BI) for subtracting the correction signal from the signal (S₁) from the hydrophone, and in that each processing circuit includes, in series, a mode filter (F1-FM), which carries out a weighted addition of the signals from the sensors (K1-KQ) and a transfer filter (G11-G1M).

3. Device according to Claim 2, characterised in that the mode filters (F1-FM) are common to the correction circuits of the hydrophones (H1-HN) of the antenna.

4. Sonar antenna characterised in that it includes a correction device according to either of Claims 2 or 3.

# FIG_1

# FIG_2